# NEW EUROPEAN PATENT SPECIFICATION

(11) **EP 0 127 009 B2**
(45) Date of publication and mention of the opposition decision: **09.06.1993**
(45) Mention of the grant of the patent: 14.01.1987
(21) Application number: 84104937.2
(22) Date of filing: 02.05.1984
(51) Int. Cl.: B23B 51/02

(54) **Drill**
Bohrer
Foret

(30) Priority: 25.05.1983 JP 93098/83
(43) Date of publication of application: 05.12.1984
(73) Proprietor: SUMITOMO ELECTRIC INDUSTRIES LIMITED, Osaka-shi, Osaka 541 (JP)
(72) Inventor: Mori, Yoshikatsu, Itami-shi Hyogo-ken (JP); Dohi, Yoshio, Itami-shi Hyogo-ken (JP); Fukagawa, Hideo, Itami-shi Hyogo-ken (JP)
(74) Representative: Patentanwälte Kirschner & Grosse

(56) References cited:
- AT-B- 301 299
- DE-A- 698 003
- DE-A- 709 460
- DE-A- 2 945 635
- DE-A- 3 131 794
- DE-U- 8 214 987
- GB-A- 1 297 896
- US-A- 3 237 488
- US-A- 3 564 947
- US-A- 4 231 692
- Roeck "Zerspannungswerkzeuge ..." 1972, S. 69, 71, 72, 74, 75
- "Werkstatt und Betrieb" 1982, S. 341, 342
- "Spanende Werkzeuge ..." Uedelhofen; VDI-Verlag 1969, S. 8/9
- DIN 1412 von 1966, S. 2
- FETTE - Schleifbuch "Instandhaltung und Prüfung ..." 1979, S. 24, 119
- STOCK-TASCHENBUCH 1979, S. 41
- "Werkstatt und Betrieb" 1979, S. 387

## Description

### Background of the Invention

### Technical field of the Invention

This invention relates to a twist drill of cemented carbide with a drill point in the tool axis and more particularly to a drill having a construction which compensates for the brittleness of cemented carbide to increase cross-break strength while decreasing cutting resistance and which improves chip ejecting function.

### Description of the prior art

Generally, drills of high speed steel have heretofore been used in drilling steel and cast iron work. However, today when there is much need to maximize the efficiency of drilling operations, there are many cases where the drill rpm (cutting speed) is increased to meet this need. Under such circumstances, increasing use is being made, as a drill material, of cemented carbide, which is superior in wear resistance. However, cemented carbide is inferior in cross-break strength to high speed steel and hence it is not a satisfactory material so far as the strength required for withstanding cutting resistance is concerned. For this reason, with the same construction as in conventional high speed steel drills it is impossible to fully develop the performance of cemented carbide drills and they can be used only under moderate cutting conditions.

In drilling operations, the quality of chip ejecting function influences cutting resistance. The greater the drilling depth, the greater the cutting resistance, thus making it necessary to improve chip ejecting function so as to prevent increase of cutting resistance. This is a matter of great importance particularly to cemented carbide drills.

The strength of drills is given by the toughness and rigidity of the material and by its bending strength and rigidity and twisting rigidity which depend on the drill configuration.

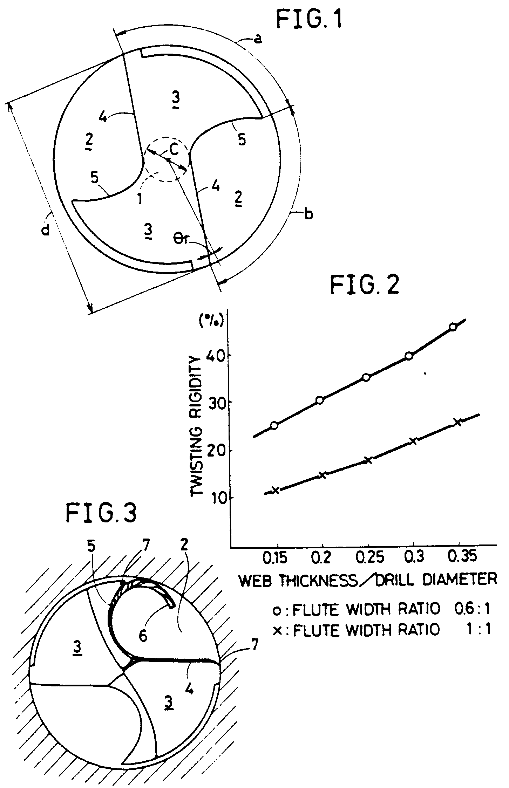

Fig. 1 shows a conventional drill, looking axially its cutting end, and the configurational elements will now be described with reference to Fig. 1. The portion indicated by broken line is a web portion 1, which is a solid portion where flutes 2 are not formed. That is, as is known in the art, the drill is spirally formed around the web portion 1 with flutes 2 serving as chip ejecting passages and land portions 3 which are thick-walled portions. Therefore, the ratio of the diameter (shown by c) of the web portion 1 to the drill diameter (shown by d), (said ratio being hereinafter referred to as the web thickness ratio and expressed in %), influences the drill strength and the ratio of the circumferential length (shown by b) of the flutes 2 to the circumferential length (shown by a) of the land portions 3, (the ratio being hereinafter referred to as the flute width ratio and expressed by b:a), and these two elements may be thought to be factors deciding the drill strength. Fig. 2 is a graph showing this relation by the relation between values of web thickness ratio and flute width ratio and values of twisting rigidity.

However, simply increasing the web thickness ratio and decreasing the flute width ratio increase cutting resistance and makes chip ejection difficult. Thus, the web thickness ratio and flute width ratio have their respective limits; generally, the web thickness ratio is set in the range 15% to 23% and the flute width ratio in the range of 1:1 to 1.3:1.

The strength required of drills should be high enough to withstand cutting resistance acting on the drill and hence the same effect of increasing the strength can be attained by decreasing cutting resistance.

The DE-A-31 31 794, for example, shows a drill with the flute width ratio of 0,02 up to 0,5, to increase the stiffness of the drill especially for deep hole drilling. However, this flute width ratio determines a flute for chip ejection which is very narrow so that the cutting resistance is increased.

Referring to Fig. 1 showing the end view illustrating the conventional configuration, it is seen that the radial rake angle Or of cutting lips 4 shows negative values at any position. Generally, the greater the rake angle, the lower the cutting resistance, which means that with conventional drills it is impossible to expect to further decrease cutting resistance.

Further, the fact that the radial rake angle Or of the cutting lips 4 is negative means that the cutting lips 4 extend increasingly backward with respect to the direction of rotation of the drill as they extend radially outward. Therefore, the relative distance between each cutting lip 4 and the flute wall 5 of the associated land portion 3 opposed thereto across the flute 2 increases. Where the relative distance is increased, as shown in Fig. 3, a chip 6 being cut by the cutting lip 4 sometimes fails to come in complete contact with the flute wall 5 and instead it extends to as far as the hole wall, which is the finished surface, thus increasing cutting resistance or damaging the hole wall. Particularly in the case of deep hole drilling, the chip 6 itself chokes up the flute 2, making chip ejection difficult and greatly increasing cutting resistance.

One of the important elements that govern such movement of the chip 6 is the relation between the shape One method of expressing the configurational relation by some index is to represent the positional relation of the flute wall 5 relative to the cutting lip 4 or of the cutting lip 4 relative to the flute wall 5 by the distance (relative distance) therebetween. In this invention, this relative distance is defined to provide a measure of the quality of chip ejection.

Further, in drills, the cutting lips 4 and the edges 7 of the land portions 3 are given a sharp form, and where a drill is made of cemented carbide which is relatively brittle, damage or break takes place most frequently in such portion, a fact which is attributable to a kind of configurational element.

A drill exhibiting an improved strength and being in particular suitable for boring deep holes, at the same time exhibiting an improved cutting performance is known from the DE-OS 31 31 794 (Hosoi). The web portion of the drill comprises a cutting lip course which, starting from the center point M, is characterized by a curve with a large curvature in the center. The cutting lip continues approximately straight in the direction towards the outside periphery of the drill, so that the cutting edge is provided with a curve section arranged in the web portion of the drill and a straight section extending to the outside. It is mentioned that this straight section may also be slightly curved.

This drill has proven to be disadvantageous in so far as the pressure forces in the web portion are considerable due to the above cutting lip course and therefore high strain concentrations occur in the center portion of the drill. The straight course of the cutting lips towards the outside periphery of the drill results in the disadvantage of the chips exhibiting an essentially constant thickness along the length thereof, so that they do not easily bend and break into short pieces. The chips are rather relatively long, so that the chip control and the chip transport is relatively poor, in particular in the case of deep holes, which results in the frictional forces being increased and the bore hole possibly becoming blocked, so that the drills break early, in particular when being used for drilling deep holes and hard materials.

### Summary of the invention

With the aforesaid points in mind, a principal object of this invention is to provide a drill wherein restrictions imposed on cutting conditions by the brittleness of cemented carbide are alleviated and the fullest use of the hardness, wear resistance and heat resistance of cemented carbide is made, thus making the drill fitted for practical use. More particularly, an object of this invention is to provide a drill wherein bending strength and rigidity and twisting rigidity are increased to increase cross-break strength while minimizing cutting resistance and improving chip ejecting function.

To achieve these objects, the invention provides a twist drill with a drill point located in the tool axis, the drill having the features of claim 1.

Further advantages derive from the features of the subclaims 2 to 14.

Therefore, an advantage of this invention is that the bending strength and rigidity and twisting rigidity of the drill are high and the cross-break strength is also high.

Another advantage of the invention is that despite the large web thickness ratio and small flute width ratio, the cutting resistance is low and hence the load on the drill is low.

A further advantage of the invention is that despite the large web thickness ratio and small flute width ratio, the chip ejecting function is high.

A further advantage of the invention is in the curved design of the cutting lips, in particular in the outside area of the drill and the chip form resulting therefrom and the improved guiding of the chip during the transport of the chips connected therewith. Due to the cutting lip which is curved according to the present invention, the chips curve slightly and are more likely to break than in the case of chips produced with conventional straight cutting lips of conventional drills. However, short curved chips are transported easier and without considerable frictional forces being generated, a fact which is especially important when drilling deep holes and hard material.

These objects and other objects, features, aspects and advantages of the present invention will become more apparent from the following detailed description of the present invention when taken in conjunction with the accompanying drawings.

### Brief description of the drawings

Fig. 1 is a view of a conventional drill looking at the cutting end thereof;
Fig. 2 is a graph showing the relation between the web thickness ratio/drill diameter and the twisting rigidity;
Fig. 3 is a schematic view showing the relation between the relative distance and the chip forming condition in a conventional drill;
Fig. 4 is a perspective view showing a preferred embodiment of a drill according to the present invention;
Fig. 5 is an end view showing the cutting end of the drill shown in Fig. 4;
Fig. 6 is a side view of the principal portion taken in the direction of arrow VI of Fig. 4;
Fig. 7 is a side sectional view taken in the direction of arrow Vll of Fig. 4;
Figs. 8 and 9 are side sectional views of the principal portion, each showing the chamfered portion of a cutting lip in a preferred embodiment of the invention;
Figs. 10 and 11 are side sectional views of the principal portion, each showing a chamfered portion at the intersection between the outer periphery of a margin and the inner peripheral surface of a flute in a preferred embodiment of a drill according to the present invention;
Figs. 12 and 13 are side sectional views of the principal portion, each showing a chamfered portion at the intersection between an outer peripheral relief surface and the inner peripheral surface of a flute in a preferred embodiment of a drill according to the present invention;
Fig. 14 is a graph showing a comparison between a conventional drill and a drill according to an embodiment of the invention as to the relation between the web thickness ratio/drill diameter and the twisting rigidity ratio;
Fig. 15 is a graph showing a comparison between a conventional drill and a drill according to an embodiment of the invention as to the relation between deflection and load with respect to bending rigidity;
Figs. 16, 17, and 18 are end views showing the cutting ends of a present inventive article sample, a conventional model sample, and a conventional form sample used for test;
Fig. 19 is a graph showing a comparison between said conventional form sample and said inventive sample as to feed and cutting resistance on the sample drills;
Fig. 20 is a schematic view showing the chip forming condition of said present inventive article sample;
Fig. 21 is a schematic view showing the chip forming condition of said conventional model sample;
Figs. 22, 23, and 24 are graphs showing the accuracy of the finished surfaces of the respective samples;
Figs. 25, 26, and 27 are sampling diagrams showing chips produced by the respective sample drills;
Fig. 28 is a graph showing the relation between 0₃ and thrust;
Fig. 29 is a graph showing a comparison between torque and thrust in the case of internal oiling and external oiling; and
Fig. 30 is a graph showing, in comparison, the relation between the number of drilled holes and the maximum wear width of the relief surface in the case of internal oiling and external oiling.

### Description of the preferred embodiments

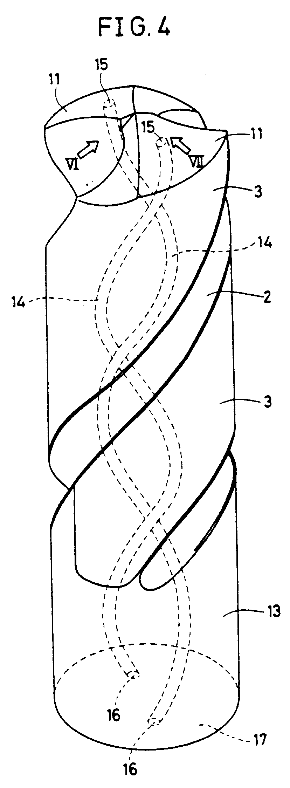

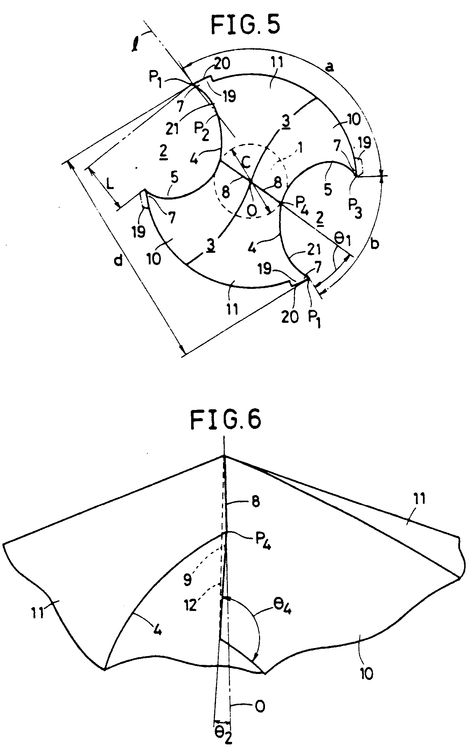

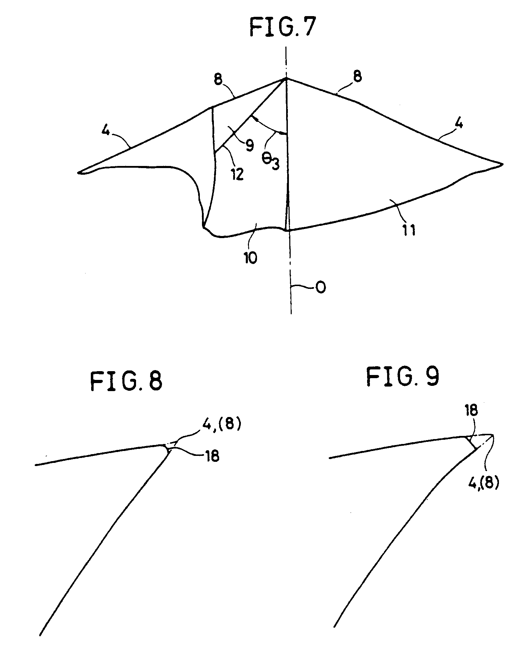

Fig. 4 is a perspective view showing the overall configuration of a drill according to a preferred embodiment of this invention, and Fig. 5 is an end view showing the cutting end of the drill. Fig. 6 is a side view of the principal portion taken in the direction of arrow Vl of Fig. 4, and Fig. 7 is a side view of the principal portion taken in the direction of arrow VII of Fig. 4.

The drill itself is made of known cemented carbide and is naturally superior to conventional high speed steel drills in hardness, wear resistance, and heat resistance.

The principal object of this invention is to specify the configuration of a drill made of cemented carbide which is highly brittle to thereby compensate for its deficiency in strength.

This configuration will now be described in detail. First referring to Fig. 5, the ratio of the diameter c of the web portion 1 (shown in broken line) to the drill diameter d, that is, the web thickness ratio is set in the range of 25% to 35%, and the flute width ratio (which is the ratio of the circumferential length b of each flute 2 in the hollow portion to the circumferential length a of each land portion 3 having thickness), b:a, is set in the range of 0.4:1 to 0.8:1. That is, as compared with conventional drills, the present drill is increased in web thickness ratio and decreased in flute width ratio.

The radial rake angle Or of each cutting lip 4 as measured at points spaced at least 2/3 of the drill diameter d toward the outer periphery is set in the range of -5⁰ to positive, with the cutting lip forming a concaved arc.

Further, the distance L (defined as the relative distance) from a perpendicular line to a reference line / connecting the outer peripheral point P₁ of the lip 4 and a comparatively outwardly located point P₂ on the cutting lip 4, drawn at point P₁, to the outer peripheral point P₃ of the flute wall 5 opposed to the cutting lip 4 is set at not more than 47% of the drill diameter d.

Since the web thickness ratio is great, the relief surface 11 of each cutting lip 4 about half rear portion, as seen in the direction of rotation of the drill, ground off by thinning, whereby the cutting lip 8 of the web portion is formed. The thinning is in axial symmetry with respect to the axial center O of the drill, whereby the rake surface 9 of each cutting lip 8 and the adjacent ground surface 10 adjoining thereto are formed. This type of thinning is called the cross thinning, and the cutting lips 8 are linearly formed 180° apart from the axial center O, as shown in Fig. 5. The chisel width formed with no cutting lip 8 is set in the range of 0 mm to 0.4 mm irrespective of the drill diameter; preferably, it is as close to 0 mm as possible. Further, the angle 8₁ formed between the direction of the line connecting the outer peripheral point P₁ of the cutting lip 4 and the direction in which the cutting lip 8 of the web portion extends is set in the range of 35° to 45°.

The rake surface 9 formed by thinning has its axial rake angle 0₂ (shown in Fig. 6) set in the range of -5° to +5_{°}. The axial length of the rake surface 9, as shown in Fig. 7, is 0 mm in the portion at the axial center O and gradually increases as it extends radially outward. The angle 0₃ formed between a valley line 12 formed by the rake surface 9 crossing the adjacent ground surface 10, and the axial center O of the drill is set in the range of 25° to 60°.

To decrease the notch effect, the portion of the valley line 12 is formed as a rounded surface having a radius of curvature of 0.3 mm to 1.0 mm to allow a continuous smooth transition of shape from the rake surface 9 to the adjacent ground surface 10. Further, this radius of curvature is set irrespective of the drill diameter.

Further, the angle 0₄ (shown in Fig. 6) formed between the rake surface 9 and the adjacent ground surface 10 is set in the range of 90° to 110°.

As shown in Fig. 4, the land portions 3 and shank 13, which are the solid portion extending from the front to rear ends of the drill, are internally formed with two spiral oiling holes 14 for cutting oil extending along the twist angle of the flutes 2. The discharge ports 16 of the oiling holes 14 are opened to the relief surfaces 11 of the cutting lips 4 and the suction ports 16 are opened to the bottom surface 17 at the rear end. The number of oiling holes 14 is desirably two but it may be one. Further, the inner diameter of the oiling holes 14 is desirably from some percent to 20% of the drill diameter from the standpoint of its relation to drill strength.

The oiling holes 14 of the drill may be formed by axially forming two holes serving as oiling holes 14 in a cemented carbide material sintered in the form of a strip, and twisting said strip at high temperature to plastically deform the same.

The cutting lips 4 and 8 or the intersections between the inner peripheral surfaces of the flutes 2 and the outer peripheral surfaces of the land portions 3 are portions of sharp form, and these portions are chamfered to prevent breakage.

Figs. 8 and 9 are enlarged sectional views of the edge portions of the cutting lips 4 and 8, and in the case of Fig. 8 the chamfered portion 18 is rounded with a radius of curvature in the range of 0.03 mm to 0.2 mm. In the case of Fig. 9, the chamfered portion 18 has a width in the range of 0.05 mm to 0.2 mm and an angle of inclination in the range of 0° to 30° with respect to the respective rake surfaces. These values are independent of the drill diameter.

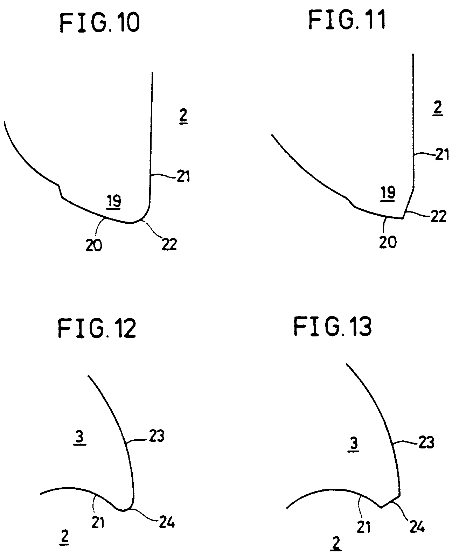

Figs. 10 and 11 are enlarged sectional views of a portion along the intersection line between the outer peripheral surface 20 of the margin 19 and the inner peripheral surface 21 of the flute 2. In the case of Fig. 10, the chamfered portion 22 has a radius of curvature in the range of 0.3% to 1.5% of the drill diameter, for example, in the range of 0.03 mm to 0.15 mm in the case of a drill diameter of 10 mm. A flat chamfered portion 20 is formed which has a width in the range of 2% to 5% of the drill diameter, for example, in the range of 0.2 mm to 1 mm in the case of a drill diameter of 10 mm to 20 mm, and which intersects the outer peripheral surface 20 of the margin 19 at an obtuse angle.

Figs. 12 and 13 are enlarged sectional views of a portion along the intersection between the outer peripheral relief surface 23 of the land 3 and the inner peripheral surface 21 of the flute 2. In the case of Fig. 12, an arcuate chamfered portion 24 is formed which has a radius of curvature in the range of 0.05 mm to 0.5 mm irrespective of the drill diameter. In the case of Fig. 13, a flat chamfered portion 24 is formed which intersects the outer peripheral relief surface 23 and the inner peripheral surface 21 of the flute 2 respectively at an obtuse angle.

Further, as shown with fictitious line in Fig. 5, each of the widthwise opposite ends of the land portion 3 may have a margin 19.

The surface of the drill whose configuration is restricted in the manner described above is formed with a cover layer made of one or more elements selected from the group consisting of TiC, TiCN, TiN, and A1₂0₃, said cover layer being in the form of a thin layer densely formed by the ion plating method or chemical vapor deposition method.

Experimental examples in which an embodiment of the invention and a conventional form are compared will now be described.

These experiments to be described below are intended to make a comparison of effects based on cutting lip and flute configurations in drills; thus, to equalize the cutting oil feed conditions in the embodiment and the conventional form, in the embodiment samples, the oiling is not of the internal oiling type using oiling holes 14 but of the external oiling type as in the conventional form. Further, to equalize the effects obtained by thinning, each sample has applied thereto the thinning according to the present invention.

First, the embodiment of the invention and the conventional form are compared as to twisting rigidity.

A comparison between conventional form samples Bₗ, B₂, B₃ and B₄ and present inventive embodiment samples A_{1'} A₂, A3, and A4 as to the web thickness ratio and flute width ratio is shown in Table 1.

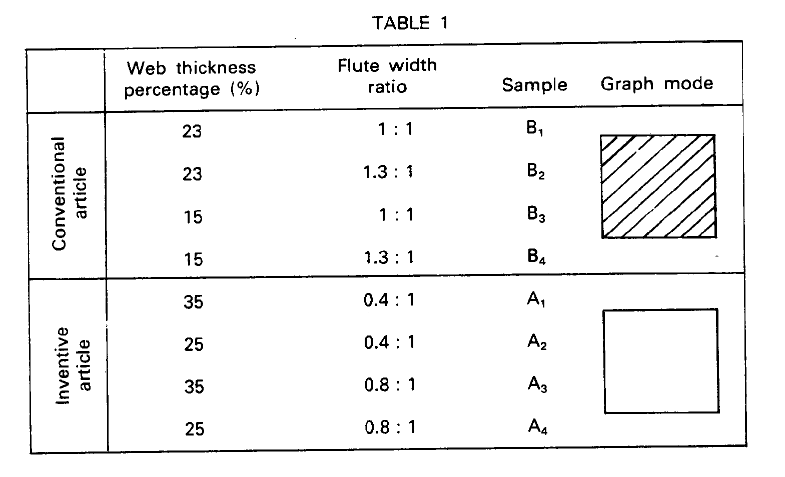

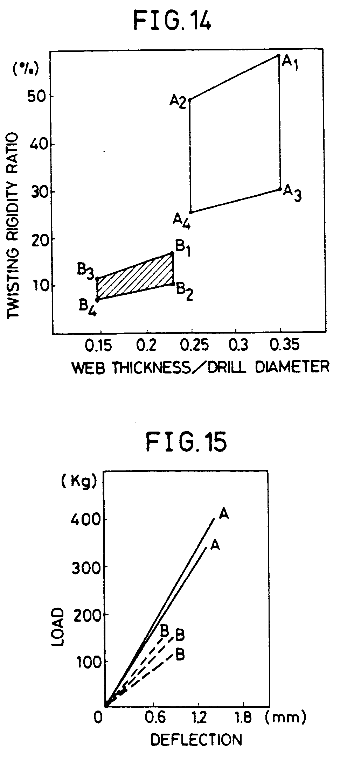

Fig. 14 is a graph showing the results of experiments on twisting rigidity in comparison with the data of Table 1, the horizontal axis representing the web thickness ratio and the vertical axis representing the twisting ridigity; it is seen that the embodiment is decidedly superior to the conventional product in twisting ridigity, that is, it is higher in strength. In addition, the twisting ridigity of a round bar member of circular cross-section having no flute is taken to be 100% and the twisting ratio is expressed in percentage in comparison with this value.

Fig. 15 shows the results of experiments on bending rigidity. The sample drill A of this invention was 2.4 mm in the diameter of the web portion, 0.5:1 in the flute width ratio, and 8.5 mm in the drill diameter, while the conventional form sample B was 1.5 mm in the diameter of the web portion, 1.1:1 1 in the flute width ratio, and 8.5 mm in the drill diameter. As for the experimental method, the sample was fixed at one end thereof in a 25 mm overhanging state, with a load placed on its free end. The horizontal axis indicates deflection and the vertical axis indicates load. It is seen that sample drills of this invention are superior in strength.

Next, samples were compared as to their strength with respect to actual drilling tests. The samples used are as shown in Table 2.

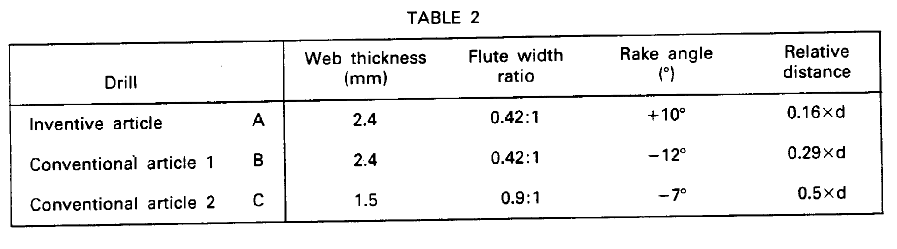

In addition, in Table 2, the relative distance is expressed in terms of proportion to the drill diameter.

The first conventional sample B was used as a model sample of typical form for comparison purposes though it is not in common used. Each drill was 8.5 mm in diameter and made of cemented carbide P30 (in Japanese Industrial Standard) coated with TiCN.

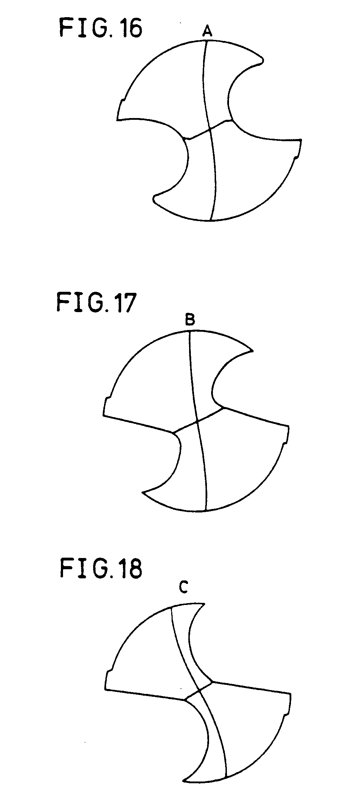

The cutting end configuration of each sample is schematically shown; that of the inventive article A is shown in Fig. 16, that of the first conventional article B in Fig. 17, and that of the conventional article C in Fig. 18. As for the cutting conditions, the cutting speed Vwas 50 mm/min, the feed per revolution, f, was 0.5 mm/rev, drilling- through was 25 mm, the material of work was SCM440, H_{B} 300, and water-soluble cutting oil was used. The results are as shown in Table 3.

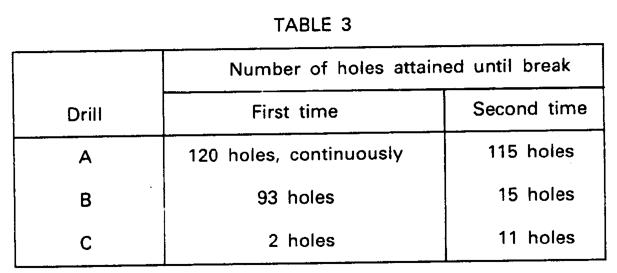

As for the first conventional article, the strength was high and data equivalent to that on the inventive article was sometimes obtained, but chips were treated only with difficulty and the cutting resistance was very high and the drill was broken.

The second conventional article was good from the standpoint of treatment of chips and cutting resistance, but the strength was low.

Thus, so far as the data on the drilling test is concerned, it is seen that the sample drill of the embodiment of this invention is better than the conventional drills.

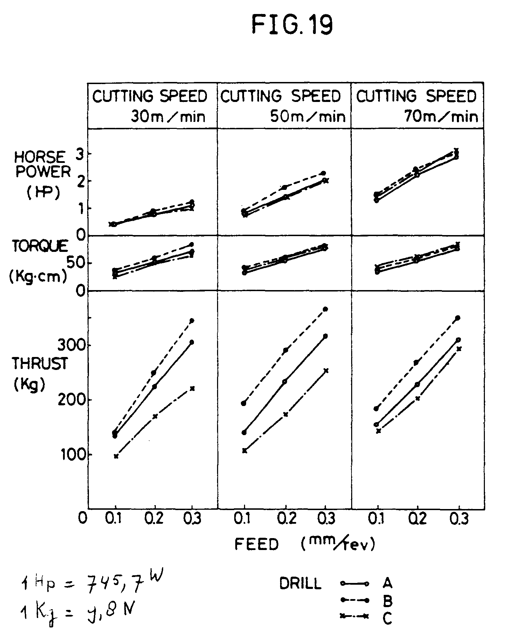

The result of the test for cutting resistance conducted by using the same samples as those mentioned above is shown in Fig. 19. Table 4 is made on the basis of this graph; each value for the second conventional article C or drill is taken to be 1 and the values for the other samples are expressed in terms of proportion.

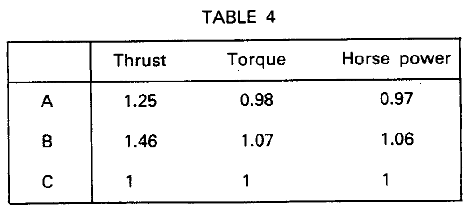

As for the conditions, the material of the work was S48C, H_{B} 230.

As can be seen from this result, when the drills of conventional form are increased in cross-sectional area, in flute width ratio and in web thickness ratio to increase the strength alone, the thrust and torque increase and also horse power increases, a fact which is undesirable, whereas in the inventive article, although an increase in web thickness ratio results in a slight increase in thrust, the torque and horse power decrease and cutting resistance lowers. That is, although the thrust increases by about 25% as a result of an increase in web thickness ratio, the torque and horse power considerably decreases because the radial rake angle is about +10_{°}. in the conventional form sample B, because the radial rake angle is -12°, the torque and horse power are, of course, great and thrust is also naturally great; thus, it is not a good drill.

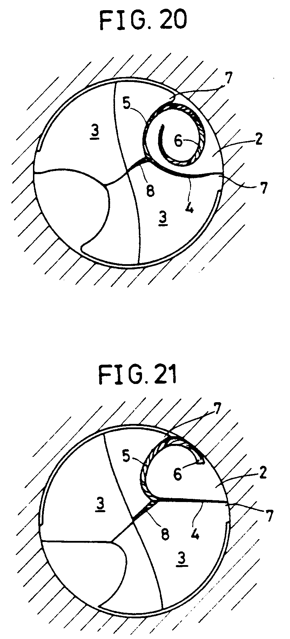

As for the cut finished surface roughness, according to this sample drill A since it is designed so that the radial rake angle is positive, its sharpness is good, and since the relative distance L between the cutting lip 4 and the flute wall 5 opposed thereto is short, chips do not come in contact with the wall of the drilled hole and instead they curl inside the flutes 2 and, as shown in Fig. 20, are discharged in the flutes 2 as they are broken.

In contrast thereto, in the conventional form sample drills B and C, since the relative distance L to the flute wall 5 is great and since the sharpness is not good, chips strike the wall of the drilled hole and thereby break and hence the cut finished surface is rough, as shown in Fig. 21 or Fig. 3 by reference to which the prior art was described.

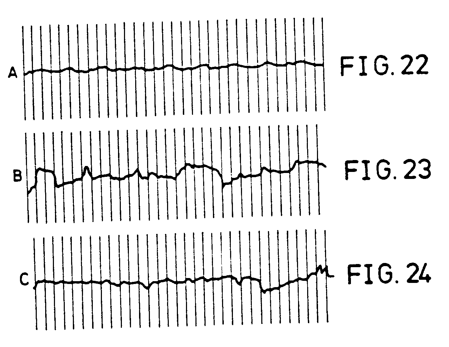

The data on finished surface roughness is as shown in Figs. 22, 23, and 24. In each of these figures, the horizontal axis represents the circumferential length of the drilled hole and the vertical axis the roughness size the circumferential length and roughness size being shown magnified by 10 times and 250 times, respectively. As can be seen from these figures, the finished surface roughness provided by the sample drill of this invention is such that the surface is highly accurately finished.

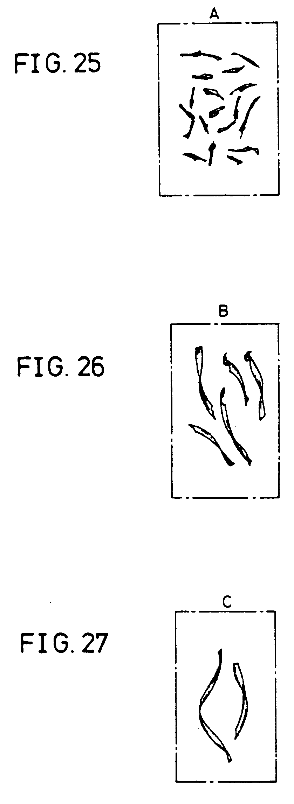

As for chips, since the relative distance L is short and since the sharpness is good, chips curl inside the flutes 2 and break into pieces which then curl with small radius. Figs. 25, 26, and 27 show the configuration of chips ejected by the sample drills A, B, and C, respectively. As is clear in these figures, in the sample drill A of the present invention, chips break into pieces which are then bent and curled and which, in the flutes 2, are shaped into easily dischargeable form; thus, as indicated by the test data, the finished surface is good without being roughened.

As for the allowance for enlargement of drilled holes, it is clear that the less the allowance and the less variation of allowance, the higher the drilling accuracy, the test data being as shown in Table 5.

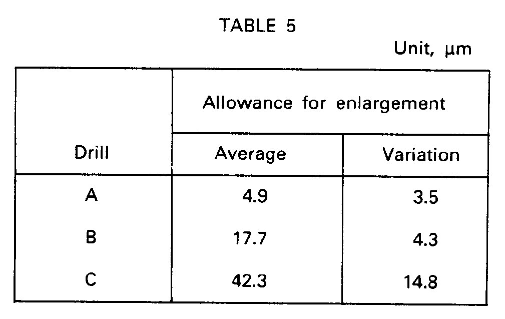

Because of the combination of the effect of the radial rake angle being positive and the effect of the twisting strength and rigidity and bending rigidity of the sample drill A being high, the allowance for enlargement of drilled holes is clearly much less in the sample of the embodiment of the invention than in the conventional form, and it is also seen that the variation of allowance is less, proving the superiority of the drill of this invention.

As a matter of course, the amount of burr which forms when the drill thrusts through the work indicates the effect of sharpness, the test result being as shown in Table 6.

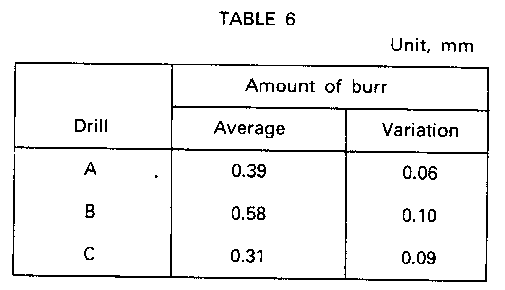

As can be seen from this data, in this invention the sharpness does not so much differ from that in the conventional form, but its variation is much less, thus undoubtedly indicating that it is possible to improve the accuracy of product where the drill is repeatedly used.

The overall ratings of the sample drills of the conventional form and of the embodiment of this invention on the basis of these test data are as shown in Table 7; in this table the mark X means "undesirable" the mark 0 means "desirable", and the mark @ means "superior". From these ratings it is seen that the sample drill A of this invention is the best of all, next comes the heretofore actually used sample drill C, and the worst is the conventional form sample B produced merely as a model.

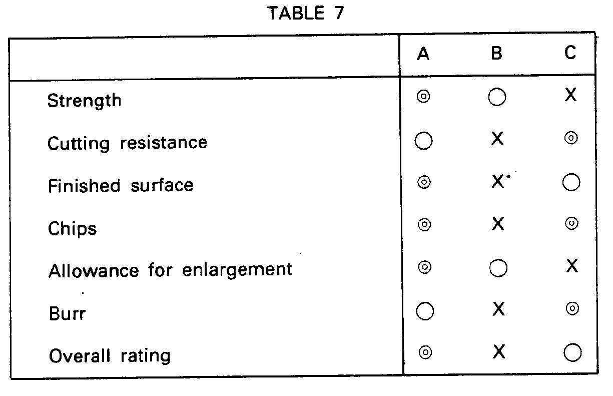

In addition, actually usable samples for use in various tests in this invention were produced for comparison with samples of conventional form, the particulars of these samples being as shown in Table 8. Apart from usefulness, these samples were capable of actual use.

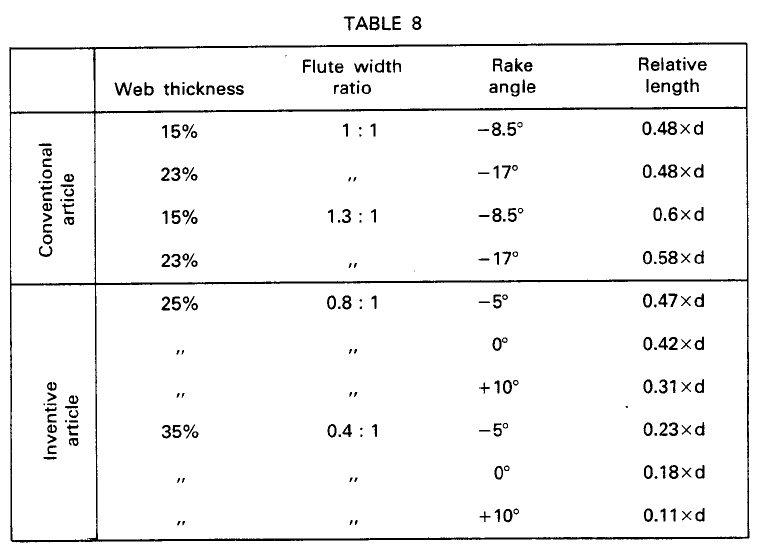

The function of the configuration specified by thinning will now be described.

In Fig. 5, since the chisel width formed with no cutting lip 8 in the web portion is set in the range of 0 mm to 0.4 mm, the cutting resistance in the web portion is greatly decreased. Further, since the angle 8₁, which influences the shape of chips, is set in the range of 35° to 45°, chips are produced in such a manner that those being removed from the portion cut by the cutting lips 8 differ in direction from those being remove drom the portion cut by the cutting lips 8 in the web portion and hence they are produced in such a form that they can be easily curled and broken. If the angle 8₁ is too small, chips would be almost flat and could hardly be curled or broken, while if it is too large, the proportion of the portion cut by the cutting lips 8 to the whole would be small and could hardly be curled.

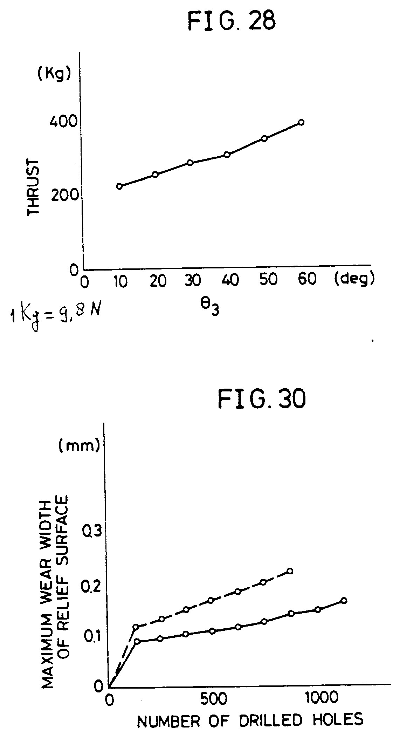

In Figs. 6 and 7, the rake angle 0₂ of the cutting lips 8 in the web portion is set at -5° to +5_{°}. The rake surface 9 of each cutting lip 8 has an axial length such that it is 0 mm in the axial central portion and gradually increases radially outward. The angle 0₃ of the valley line 12 with respect to the axial center O is set at 25° to 60°. These configurations are determined with angles which provide the rake surface 9 with a sufficient axial length to prevent chips cut by the cutting lips 8 from striking the adjacent ground surface 10 to increase thrust, and they are determined so as to provide a sufficient breaking action on chips. Further, they are determined so that a sufficient strength may be obtained. In addition, Fig. 28 is a graph showing the relation between the size of the angle 0₃ and the size of the thrust acting on the drill.

Further, since the portion along the valley line 12 is formed with a rounded curved surface, breakage due to notch effect can be prevented; if its radius of curvature is too small, notch effect could not be sufficiently reduced, while if it is too large, the axial length of the rake surface 9 could not be made sufficiently great or the rake angle 0₂ would be negative, detracting from sharpness. Thus, the proper radius of curvature is in the range of 0.3 mm to 1.0 mm. Further, the fact that the angle 0₄ in Fig. 6 is set in the range of 90° to 110⁰ prevents chips from increasing thrust and provides a sufficient breaking action.

That is, cross thinning is applied to the front end of the drill to form cutting lips on the web portion, whereby it is possible to minimize the increase of cutting resistance due to increasing the web thickness ratio, and where a highly brittle material such as cemented carbide is used has a material for the drill it is possible to prevent breakage due to brittleness. Particularly, by providing the portion along the valley line 12 with a rounded curved surface, it is possible to prevent a break due to the portion along the valley line 12 cracking. Further, it is possible to maintain chips in suitable curl form to promote the chip ejecting function.

The action of the oiling holes 14 for cutting oil will now be described.

In drilling operations, it is common practice to feed cutting oil to the cutting lips to cool and lubricate the cutting lips and work. The common oiling method is to feed cutting oil to the cutting portion of the drill sunk into the work, from the outside through the drill flutes and through a clearance between the drill and the wall of the hole in the work being drilled. However, in drilling operations using a drill made of cemented carbide, one object is to increase the rotative speed of the drill, and since the drill flutes are spirally formed to discharge chips from the hole when the drill is rotating, the cutting oil fed along the flutes is subjected to a centrifugal force which throws the oil out of the hole. Thus, particularly in deep drilling, it follows that it is impossible for the cutting oil to reach the cutting lips. In deep drilling, chip ejection is not smoothly effected, causing the danger of increasing the cutting resistance to break the drill.

However, in a drilling operation using a drill having oiling holes 14 constructed in the manner described above, when cutting oil is forced in from the suction ports 16 of the oiling holes 14 through a drill holder, it flows through the oiling holes 14 and out of the discharge ports 15 at the front end and then fed to the cutting lips 4, thus effectively cooling the cutting lips. Further, the return oil passes through the flutes 2 and is discharged, during which time it accelerates the discharge of chips and cools the work. Therefore, the cutting resistance (torque and thrust) is stabilized and hence breakage is prevented.

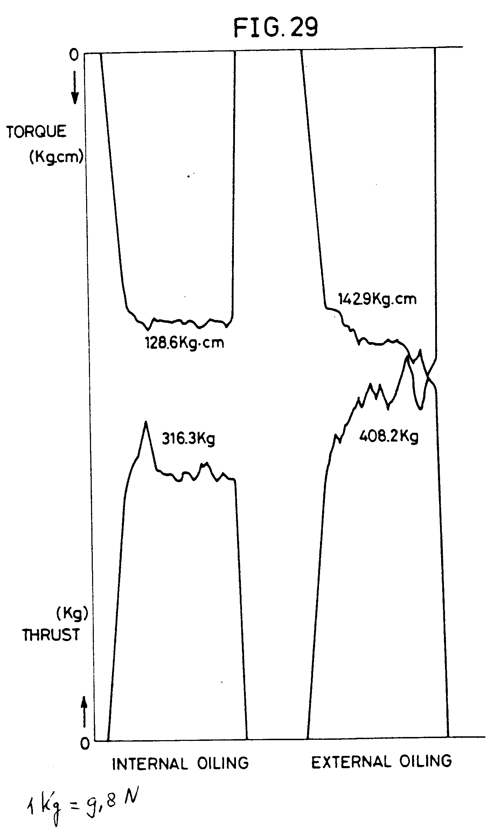

Fig. 29 is a graph showing how torque and thrust change when cutting oil is fed externally and internally. Under the present conditions, the drill diameter is 10 mm and a 40 mm thick plate of S50C, H_{B} 250 is drilled, the cutting conditions being such that the cutting speed V is 50 m/min, feed per revolution, f, is 0.3 mm/rev. As illustrated, the maximum torque is 142.9 kg-cm (14,1 Nm) for external oiling and 128.6 kg-cm (12,6 Nm) for internal oiling, while the maximum thrust is 408.2 kg (4003 N) for external oiling and 316.3 kg (3103 N) for internal oiling. In each case, the cutting resistance or load is lower where internal oiling is used.

Fig. 30 is a graph shows the amount of wear of the cutting lips. The conditions are the same as the aforesaid conditions. The solid line refers to internal oiling and the broken line to external oiling. As illustrated, it is clear that the amount of wear is less in the case of internal oiling. That is, it is seen that internally feeding cutting oil ensures perfect cooling and lubrication of the cutting lips.

In addition, the oiling holes in the shank 13 of the drill may be linear rather than spiral.

The chamfered portions of the drill were described with reference to Figs. 8 through 13. The portions to which chamfering is applied are all the portions having a sharp form, and particularly in the case of a drill using cemented carbide which is very brittle, the provision of such chamfered portions is effective in preventing breakage of such portions.

Next, the action of a drill having coating layer of TiC, TiCN, TiN, and/or A1₂0₃ on its surface will now be described.

Coating with said materials improves the heat resistance of the drill and prevents its wear, and their low coefficients of friction make it possible to reduce thrust and torque.

When the drill is worn out, it is reground to resharpen the cutting lips, the even if this regrinding exposes the mother metal in the relief surfaces 11 of the drill, the coating layer remains in the rake surface and the outer peripheral surface of the margins 19, so that the cutting resistance can be maintained at the lower level.

While the embodiments refer to drills using cemented carbide or other highly brittle materials, it goes without saying that the same functions and effects can be obtained even if the invention is applied to high speed drills.

### Effects of the invention

The drill of this invention basically has the effect of greatly increasing twisting rigidity and also bending rigid ity.

And drilling operations can be performed with lower torque and horse power than when using the drill of conventional form, and as compared with a drill of conventional form which has a negative radial rake angle but which is modified by simply increasing the web thickness ratio and decreasing the flute width ratio, the drill of the invention has the superior effect of greatly decreasing the cutting resistance.

Further, the decreased relative distance enables the ejection of chips to be effected exclusively inside the flutes and accelerates the ejection without damaging the wall of the hole in the work, so that the finishing ac- curary is improved and the yield of product is increased.

That is, according to this invention, the advantage of cemented carbide superior in wear resistance is fully utilized, and drilling with less cutting resistance than in the prior art is possible, and since the rigidity is improved as a whole, there is much less breakage of drills.

Although the present invention has been described and illustrated in detail, it is clearly understood that the same is by way of illustration and example only and is not to be taken by way of limitation, the scope of the present invention being limited only by the terms of the appended claims.

## Claims

1. Twist drill with a drill point located in the tool axis, the drill having the following features:
a the drill is produced of cemented carbide;
b1 the ratio of the diameter of the web portion (c) to the drill diameter (d) lies within the range of 25% to 35% measured in an end view;
b2 the flute width ration (b:a) is set in the range of 0.4:1 to 0.8:1 measured in an end view;
b3 the configuration of said web portion (1) formed by thinning is such that the chisel width is in the range of 0 mm to 0.4 mm, and in said end view of the cutting end the cutting lips (8) radially outwardly extending from the axial center (O) of said web portion (1) are each linearly formed, and the angle 8₁ formed between the direction in which the cutting lip (8) of said web portion (1) extends and the direction extending from said axial center to the outer peripheral end (4) extending to the outermost peripheral side of the drill from the radial outermost end P₄ of the cutting lip (8) of said web portion (1), where these directions intersect each other is set in the range of 35° to 45°;
b4 the rake surface (9) of said web portion (1) formed by thinning has its axial rake angle 0₂ set in the range of -5⁰ to +50, the axial length being 0 mm at the axial center 0 of the drill, and the valley line (12) defined by said rake surface (9) intersecting the adjacent ground surface (10) formed concurrently therewith by thinning has an angle 0₃ of inclination in the range of 25° to 60°;
b5 the angle 0₄ formed between the rake surface (9) of said web portion (1) and said adjacent ground surface (10) is in the range of 90° to 110°;
b6 the radial rake angle (θᵣ) of the cutting lip (4) amounts in an end view of the cutting end in the range of -5° to positive, 8ᵣ being measured at positions which are spaced at least 2/3 the drill diameter toward the outer peripheral side, wherein in said end view of the cutting end, the portion of the cutting lip (4) spaced at least 2/3 of the drill diameter (d) toward the outer peripheral side is concave arcuate and
b7 the distance L ≧ drill diameter d x 47% seen in the end view of the cutting end, wherein:
- a straight line (1) is defined by two points P₁ and P₂,
- P₁ = outer circumferential point of cutting lip (4),
- P₂ = point on the cutting lip (4) having a distance of 2/3 of the radius from the centre (0),
- a line is drawn through point P₁ perpendicular to the straight line (I),
- P₃ = outer cicumferential point on the flute wall (5), and
- L = distance of the line through point P₁ to point P₃.

2. Drill according to claim 1, wherein in said end view of the cutting end the rake angle 8ᵣ is set in the range of 0° to positive.

3. Drill according to claim 1, wherein the portion (22) where the outer peripheral surface (20) of the margin (19) intersects the inner peripheral surface (21) of the flute (2) is chamfered.

4. Drill according to claim 3, wherein said chamfered portion (22) is an inclined plane which obliquely intersects the outer peripheral surface (20) of said margin (19).

5. Drill according to claim 4, wherein said inclined plane has a width which is in the range of 2% to 5% of the drill diameter d.

6. Drill according to claim 3, wherein said chamfered portion (22) has a rounded curved surface.

7. Drill according to claim 6, wherein said rounded curved surface has a radius of curvature which is in the range of 0.3% to 1.5% of the drill diameter d.

8. Drill according to claim 3, wherein the portion where outer relief surface (23) of the land (3) intersects the inner peripheral surface (21) of the flute (2) is a flat chamfered portion (24) whose radius of curvature is in the range of 0.05 mm to 0.5 mm or which intersects said respective surfaces at obtuse angles.

9. Drill according to one of the preceding claims, wherein the cross-section of the boundary region passing from the rake surface (9) of said web portion (1) to said adjacent ground surface (10) forms an arc whose radius of curvature is in the range of 0.3 mm to 1.0 mm.

10. Drill according to one of the preceding claims, wherein all of the cutting lips including those of said web portion (1) are each formed with a chamfered portion (18) in the form of either an arc having a radius of curvature in the range of 0.03 mm to 0.2 mm or a slope having a width in the range of 0.05 mm to 0.2 mm and forming an angle in the range of 0° to 30° with the rake surface.

11. Drill according to claim 1, wherein each of the widthwise opposite ends of the land portion (3) has a margin (19).

12. Drill according to claim 1, wherein the shank (13) extending from the rear end to the front end of said drill and the land portions (3) of the main body are internally formed with oiling holes (14).

13. Drill according to claim 1, wherein part of the surface of the main body of the drill including at least the cutting lips (4, 8) or all said surface is coated with one or a combination of two or more elements selected from the group consisting of TiC, TiCN, TiN and AI₂0₃.

14. Drill according to claim 13, wherein part of said surface including at least the cutting lips (4,8) includes at least the rake surface and the outer peripheral surface (20) of the margin (19).

## Patentansprüche

1. Spiralbohrer mit einer in der Werkzeugachse gelegenen Bohrerspitze, wobei der Bohrer folgende Merkmale aufweist:
a der Bohrer ist aus Hartmetall hergestellt;
b1 das Verhältnis des Durchmessers des Kernbereichs (c) zum Bohrerdurchmesser (d) liegt zwischen 25% und 35%, gemessen in einer Draufsicht;
b2 das Spannutbreitenverhältnis (b:a) liegt im Bereich von 0,4:1 bis 0,8:1, gemessen in einer Draufsicht;
b3 der verjüngend ausgebildete Aufbau des Kernbereichs (1) ist so, daß die Meißelbreite im Bereich von 0 mm bis 0,4 mm liegt, und in der Draufsicht der Schneidfläche sind die Schneidkanten (8), die sich vom Mittelpunkt (O) des Kernbereichs (1) radial nach außen erstrecken, jeweils linear ausgebildet, und der Winkel 0₁, der zwischen der Richtung, in der sich die Schneidkante (8) des Kernbereichs (1) erstreckt, und der Richtung gebildet wird, die sich vom Mittelpunkt zur äußersten Umfangskante (4) erstreckt, welche sich zur äußeren Umfangsseite des Bohrers vom radialen äußersten Ende P₄ der Schneidkante (8) des Kernbereichs (1) erstreckt, an der Stelle, wo diese Richtungen einander schneiden, liegt im Bereich von 35° bis 45°;
b4 die sich verjüngende Spanfläche (9) des Kernbereichs (1) weist einen axialen Spanwinkel O₂ im Bereich von -5° bis +5_{°} auf, und die axiale Länge am Mittelpunkt 0 des Bohrers beträgt 0 mm, und die Grundlinie (12), die durch die Spanfläche (9) bestimmt ist, die die angrenzende Grundfläche (10) schneidet, die gleichlaufend damit durch Verjüngung ausgebildet ist, weist einen Neigungswinkel 0₃ im Bereich von 25° bis 60° auf;
b5 der Winkel 0₄, der zwischen der Spanfläche (9) des Kernbereichs (1) und der angrenzenden Grundfläche (10) ausgebildet ist, liegt im Bereich von 90° bis 110°;
b6 der radiale Spanwinkel (0ᵣ) der Schneidkante (4) liegt in einer Draufsicht der Schneidfläche im Bereich von -5° bis zum Positiven, wobei er an Stellen gemessen wird, die mindestens in einem Abstand von 2/3 des Bohrerdurchmessers zur äußeren Umfangsseite angeordnet sind, wobei in dieser Draufsicht auf die Schneidfläche der mindestens in einem Abstand von 2/3 des Bohrerdurchmessers (d) zur äußeren Umfangsseite beabstandete Bereich der Schneidkante (4) konkav gekrümmt ist und
b7 der Abstand L Z Bohrerdurchmesser d x 47%, was in der Draufsicht auf die Schneidfläche ersichtlich ist, dabei:
- ist eine Gerade (1) durch zwei Punkte P₁ und P₂ festgelegt,
- P₁ = der äußere Umfangspunkt der Schneidkante (4),
- P₂ = der Punkt auf der Schneidkante (4), der um 2/3 des Radius' vom Zentrum (0) beabstandet ist,
- wird durch Punkt P₁ eine zur Geraden (I) senkrechte Linie gezogen,
- P₃ = äußerer Umfangspunkt auf der Nutwand (5), und
- L = Abstand der Linie durch Punkt P₁ zu Punkt P₃.

2. Bohrer nach Anspruch 1, wobei in der Draufsicht auf die Schneidfläche der Spanwinkel Θᵣ im Bereich von 0° zum Positiven liegt.

3. Bohrer nach Anspruch 1, wobei das Teil (22), wo die äußere Umfangsfläche (20) des Randes (19) die innere Umfangsfläche (21) der Gewindenut (2) schneidet, abgeschrägt ist.

4. Bohrer nach Anspruch 3, wobei das abgeschrägte Teil (22) eine geneigte Fläche ist, die die äußere Umfangsfläche (20) des Randes (19) schiefwinklig schneidet.

5. Bohrer nach Anspruch 4, wobei die geneigte Fläche eine Breite im Bereich von 2% bis 5% des Bohrerdurchmessers d aufweist.

6. Bohrer nach Anspruch 3, wobei das abgeschrägte Teil (22) eine runde gekrümmte Fläche aufweist.

7. Bohrer nach Anspruch 6, wobei die runde gekrümmte Fläche einen Krümmungsradius im Bereich von 0,3% bis 1,5% des Bohrerdurchmessers d aufweist.

8. Bohrer nach Anspruch 3, wobei das Teil, wo die äußere Umfangsbodenfläche (23) des Flächenteils (3) die innere Umfangsfläche (21) der Gewindenut (2) schneidet, ein flaches abgeschrägtes Teil (24) ist, dessen Krümmungsradius im Bereich von 0,05 mm bis 0,5 mm liegt oder der diese Flächen unter stumpfen Winkeln schneidet.

9. Bohrer nach einem der vorhergehenden Ansprüche, wobei der Querschnitt des Randbereichs, der von der Spanfläche (9) des Kernbereichs (1) zur angrenzenden Grundfläche (10) verläuft, einen Bogen bildet, dessen Krümmungsradius im Bereich von 0,3 mm bis 1,0 mm liegt.

10. Bohrer nach einem der vorhergehenden Ansprüche, wobei alle Schneidkanten, einschließlich denen des Kernbereiches (1), jeweils mit einem abgeschrägten Teil (18) ausgebildet sind, die einen Krümmungsradius im Bereich von 0,03 mm bis 0,2 mm aufweisen oder eine Schräge mit einer Breite im Bereich von 0,05 mm bis 0,2 mm und mit der Spanfläche einen Winkel bilden im Bereich von 0° bis 30°.

11. Bohrer nach Anspruch 1, wobei jede der breitseitig gegenüberliegenden Enden des Flächenteils (3) einen Rand (19) aufweisen.

12. Bohrer nach Anspruch 1, wobei der Schaft (13), der sich vom hinteren Ende zum vorderen Ende des Bohrers erstreckt, und die Flächenteile (3) des Hauptkörpers integriert mit Ölleitungen (14) ausgebildet sind.

13. Bohrer nach Anspruch 1, wobei das Flächenteil des Hauptkörpers des Bohrers einschließlich wenigstens der Schneidkanten (4,8) oder aller Flächen mit einem oder einer Kombination von zwei oder mehreren Elementen beschichtet ist, die aus der Gruppe Tic, TiCN, TiN oder Al₂O₃ bestehen.

14. Bohrer nach Anspruch 13, wobei das Flächenteil, das mindestens die Schneidkanten (4,8) enthält, wenigstens die Spanfläche und die äußere Umfangsfläche (20) des Randes (19) mit einschließt.

## Revendications

1. Foret hélicoïdal avec un point de perçage situé dans l'axe d'outil, le foret ayant les particularités suivantes :
a le foret est fait de carbure fritté ;
b1 le rapport du diamètre de la partie lame centrale (c) au diamètre du foret (d) se trouve à l'intérieur de la plage allant de 25 % à 35 %, mesuré sur une vue d'extrémité ;
b2 le rapport de largeur de goujure (b/a) est pris dans la plage allant de 0,4/1 à 0,8/1, mesuré sur une vue d'extrémité ;
b3 la conformation de ladite partie de lame centrale (1) formée par amincissement est telle que la largeur de l'arrête coupante est dans la plage de 0 mm à 0,4 mm, et, dans ladite vue d'extrémité de l'extrémité de coupe, les lèvres de coupe (8), s'étendant radialement vers l'extérieur à partir de l'axe central (O) de ladite partie lame centrale (1), sont chacune conformées de manière rectiligne, et l'angle 0₁, formé entre la direction dans laquelle la lèvre coupante (8) de ladite partie lame centrale (1) s'étend et la direction s'étendant à partir dudit axe central vers l'extrémité périphérique extérieure (4) s'étendant jusqu'au bord périphérique le plus à l'extérieur du foret à partir de l'extrémité radialement la plus à l'extérieur P₄ de la lèvre coupante (8) de ladite partie lame centrale (1), où ces directions se coupent l'une et l'autre, est choisi dans la plage de 35° à 45° ;
b4 la face en dépouille (9) de ladite partie lame centrale (1) formée par amincissement, a son angle de dépouille axiale Θ₂ choisi dans la plage allant de -5° à +5_{°}, la longueur axiale étant de 0 mm au droit de l'axe central O du foret, et la ligne de creux (12), définie par la surface en dépouille (9) coupant la surface meulée (10) adjacente, formée concurremment avec elle par amincissement, a un angle 0₃ d'inclinaison dans la plage allant de 25° à 60⁰ ;
b5 l'angle 0₄, formé entre la surface en dépouille (9) de ladite partie lame centrale (1) et ladite surface meulée (10) adjacente, est dans la plage allant de 90° à 110°.
b6 l'angle de dépouille radiale (Θᵣ) de la lèvre de coupe (4) se trouve, sur une vue d'extrémité de l'extrémité de coupe, dans la plage allant de -5° vers les valeurs positives, Θᵣ étant mesuré au droit de positions qui sont espacées d'au moins les 2/3 du diamètre du foret en direction du bord périphérique extérieur, dans lequel, sur ladite vue d'extrémité de l'extrémité de coupe, la partie de la lèvre de coupe (4) espacée d'au moins les 2/3 du diamètre de foret (d) en direction du bord périphérique extérieure, est en forme d'arc concave ; et,
b7 la distance L est inférieure ou égale au diamètre de foret d x 47 %, vue sur la vue d'extrémité de l'extrémité de coupe, où :
- une ligne droite (1) est définie par deux points P₁ et P₂,
- P₁ = le point circonférentiel de la lèvre de coupe (4),
- P₂ = le point sur la lèvre de coupe (4) situé à une distance, du centre (O), égale aux 2/3 du rayon,
- une ligne est tracée, en passant par le point P₁, perpendiculairement à la ligne droite (1),
- P₃ = le point circonférentiel extérieur de la paroi de goujure (5), et
- L = la longueur, jusqu'au point P₃, de la ligne passant par le point P₁.

2. Foret selon la revendication 1, dans lequel, sur ladite vue d'extrémité de l'extrémité de coupe, l'angle de dépouille Θᵣ est pris dans la plage allant de 0° vers les valeurs positives.

3. Foret selon la revendication 1, dans lequel la partie (22), où la surface périphérique extérieure (20) de la marge (19) coupe la surface périphérique intérieure (21) de la goujure (2), est chanfreinée ;

4. Foret selon la revendication 3, dans lequel ladite partie chanfreinée (22) est un plan incliné qui coupe obliquement la surface périphérique extérieure (20) de ladite marge (19).

5. Foret selon la revendication 4, dans lequel ledit plan incliné a une largeur qui est dans la plage allant de 2 % à 5 % du diamètre de foret d.

6. Foret selon la revendication 3, dans lequel ladite partie chanfreinée (22) présente une surface incurvée arrondie.

7. Foret selon la revendication 6, dans lequel ladite surface incurvée arrondie a un rayon de courbure qui est dans la plage allant de 0,3 % à 1,5 % du diamètre de foret d.

8. Foret selon la revendication 3, dans lequel la partie, où la surface extérieure en relief (23) du listel (3) coupe la surface périphérique intérieure (21) de la goujure (2), est une partie chanfreinée plate (24) dont le rayon de courbure est dans la plage allant de 0,05 mm à 0,5 mm, ou bien qui coupe lesdites surfaces respectives selon des angles obtus.

9. Foret selon l'une quelconque des revendications précédentes, dans lequel la coupe transversale de la région limite allant de la surface en dépouille (9) de ladite partie lame centrale (1) jusqu'à la surface meulée (10) adjacente, forme un arc dont le rayon de courbure est dans la plage allant de 0,3 à 1,0 mm.

10. Foret selon l'une quelconque des revendications précédentes, dans lequel la totalité des lèvres de coupe incluant celles de ladite partie lame centrale (1) sont chacune formées avec une partie chanfreinée (18) en forme de, soit un arc ayant un rayon de courbure dans la plage allant de 0,03 mm à 0,2 mm, soit une pente ayant une largeur dans la plage allant de 0,05 mm à 0,2 mm et formant un angle dans la plage de 0° à 30° avec la surface en dépouille.

11. Foret selon la revendication 1, dans lequel chacune des extrémités opposées, dans le sens de la largeur, de la partie listel (3) possède une marge (19).

12. Foret selon la revendication 1, dans lequel la tige (13) s'étendant à partir de l'extrémité arrière jusqu'à l'extrémité avant dudit foret et les parties listels (3) du corps principal sont conformées de manière interne avec des trous de lubrification (14).

13. Foret selon la revendication 1, dans lequel la partie de la surface du corps principal du foret, comprenant au moins les lèvres de coupe (4, 8), ou la totalité de ladite surface, est revêtue avec un, ou une combinaison de deux ou plus des éléments sélectionnés à partir du groupe constitué de : TiC, TiCN, TiN et Al₂O₃.

14. Foret selon la revendication 13, dans lequel la partie de ladite surface comprenant au moins les lèvres de coupe (4, 8) comprend au moins la surface en dépouille et la surface périphérique extérieure (20) de la marge (19).
